# EUROPEAN PATENT APPLICATION

(11) **EP 4 501 623 A2**
(43) Date of publication of application: **05.02.2025**
(21) Application number: 24219889.3
(22) Date of filing: 08.01.2021
(51) Int. Cl.: B32B 15/085

(54) **INSULATION PANEL**

(30) Priority: 15.01.2020 BE 202005025
(62) Divisional of application: 21150744.7
(71) Applicant: Unilin, BV, 8710 Wielsbeke (BE)
(72) Inventor: EL FGAIER, Faycal, 59120 Loos (FR)
(74) Representative: Unilin Technologies

(57) **Abstract**

An insulation panel comprises a thermal insulation layer (112) and, on one side of the thermal insulation layer, a first barrier layer (120). The insulation panel, on the surface of the side which comprises the first barrier layer, has a layer (114) which forms a relief - preferably a structured relief pattern - across this surface of the insulation panel. This relief is provided in or on a film/foil - preferably on a plastic film/foil - which is laminated on or in the first barrier layer.

## Description

The invention relates to insulation panels. The invention relates in particular to insulation panels which can be used to insulate pitched roofs from the outside.

More and more often, roofs are being thermally insulated. This also applies to pitched roofs, both in the construction of new buildings and in the renovation of existing ones. With pitched roofs, thermal insulation can be fitted on the inside of the pitched roof, e.g. between the roof trusses. However, it is also possible, for example during renovation, to fit this thermal insulation to the outside of the pitched roof, i.e. to the roof boarding or to the roof trusses, after which the roof covering (e.g. tiles or slates) is attached to the insulation. To this end, the necessary laths are provided on the thermal insulation. Fitting insulation panels on the outside has the advantage that there are no heat bridges and that the insulation is uninterrupted.

It is known to use insulation panels comprising a polyisocyanurate foam layer for the insulation of pitched roofs. These insulation panels typically have a gas-tight barrier layer on one, but usually on both sides of the insulation panel.

It is an object of the invention to provide insulation panels which make it possible to install insulation panels on the outside of pitched roofs in a smoother and in particular safer manner.

Therefore, the first aspect of the invention relates to an insulation panel. The insulation panel comprises a thermal insulation layer; and, on one side of the thermal insulation layer, a first barrier layer. The insulation panel is characterized by the fact that the insulation panel, on the surface of the side which comprises the first barrier layer, has a layer which forms a relief - preferably a structured relief pattern - across this surface of the insulation panel.

The expression "forms a relief is understood to mean that irregularities are formed on the surface, or in other words, differences in height.

The insulation panel of the invention makes it possible to provide pitched roofs with insulation in a smoother, quicker and safer manner, in particular in circumstances with wintery conditions, such as much wind, snow and frost. The people who attach the insulation panels to the roof boarding usually tend to walk across the already installed insulation panels during installation. By providing the insulation panels with a relief, it is possible to walk across them in a smoother, quicker and safer way. As a result thereof, this insulation procedure can be performed more smoothly, more quickly and more safely.

Preferably, the relief is formed by polymer material. More preferably, the polymer material is a thermoplast, preferably polyvinyl chloride, more preferably polyvinyl chloride containing plasticizers. Such embodiments make it readily possible to form relief.

Preferably, the relief is formed by polymer material, wherein the layer which forms the relief is formed by convex coating deposits of the polymer material on the first barrier layer. More preferably, the convex coating deposits are applied as discrete amounts of polymer on a plastic film which is laminated on or in the first barrier layer. This plastic film may, for example, be a polyester plastic film; the polymer material may be, for example, polyvinyl chloride, more preferably polyvinyl chloride containing plasticizer.

Alternatively, the relief may be formed by a thermoset, for example made of polyurethane.

When using polymer material to form the relief, the mass of the polymer material is preferably between 10 and 20 grams per square metre of surface area of the insulation panel, e.g. 15 g/m². Surprisingly, it has been found that such low volumes offer the cited advantages of the invention.

Preferably, the thermal insulation layer comprises or consists of a foam layer. More preferably, the foam layer is a foam layer comprising closed cells.

If the thermal insulation layer contains or consists of a foam layer, said foam layer is preferably bonded to the first barrier layer. Preferably, this bond is produced by applying, during the production of the insulation panel, liquid material to the first barrier layer and allowing it to foam in order to form the foam layer.

Preferably, the thermal insulation layer contains or consists of a polyisocyanurate foam layer or a polyurethane foam layer. More preferably, the polyisocyanurate foam layer or the polyurethane foam layer is a foam layer comprising closed cells.

Preferably, the thermal insulation layer contains or consists of a phenolic foam. More preferably, the phenolic foam is a phenol formaldehyde foam.

In one embodiment of the invention in which the thermal insulation layer contains a foam layer - preferably according to any of the embodiments mentioned - the thermal insulation layer contains a further insulation layer, preferably glass wool or mineral wool. More preferably, the first barrier layer is provided on the foam layer.

In embodiments in which the thermal insulation layer contains or consists of a polyisocyanurate foam layer or a polyurethane foam layer, this polyisocyanurate foam layer or the polyurethane foam layer is preferably bonded to the first barrier layer. Preferably, this bond is brought about by applying liquid material to the first barrier layer during the production of the insulation panel and to allow it to foam to form the polyisocyanurate foam layer or the polyurethane foam layer.

Preferably, the first barrier layer comprises a varnish layer. This varnish layer makes it possible to form an improved bond of and with polymer material applied later to form the relief.

In preferred embodiments, the relief is formed by polymer material. The polymer material which forms the relief is situated on the first barrier layer. More preferably, zones are formed by the polymer material and zones are formed by the first barrier layer - in a preferably regularly alternating way or in an irregular way - on the surface of the insulation panel which has the relief. This may be achieved by applying discrete amounts of polymer material distributed across the surface of the first barrier layer, e.g. applying point coatings by means of screen-printing or by means of structured rollers. Between the point coatings, the surface of the barrier layer is visible and accessible.

Alternatively, it is also possible for the entire surface of the first barrier layer to be covered by the polymer material forming the relief.

It is also possible to provide the relief in or on a film/foil - preferably on a plastic film - which is laminated on or in the first barrier layer. When this film/foil which comprises a relief is laminated on the barrier layer, the relief in or on the film/foil forms the relief on the surface of the insulation panel. However, it is also possible to laminate such a film/foil with relief as a layer in the barrier layer, the relief then presses through the covering layer (or layers) to form the relief on the surface of the insulation panel.

It is for example possible to laminate a film/foil which has a relief into or onto the barrier layer, in which case this relief of the film/foil forms a relief on the surface of the barrier layer, even if one or more other layers were laminated on top of the film/foil comprising a relief.

When using a film/foil, is the possible to form the relief on the film/foil by means of polymer material. As a result thereof, for example, on one surface of the insulation panel zones may be formed by polymer material (and form a relief) and zones may be formed by the film/foil itself. The zones formed by polymer material and the zones formed by the film/foil itself may alternate in a regular or irregular way.

Alternatively, it is also possible to form the relief on a film/foil by means of polymer material, but with the polymer material covering the entire surface of the film/foil.

It is also possible to provide the relief in the film/foil, in which case the film/foil has the same chemical composition across its entire surface. Such a film/foil may, for example, form part of the first barrier layer as a top layer.

In preferred embodiments, the relief is a regularly repeating relief pattern across the surface of the insulation panel. This regularly repeating relief pattern may be formed, for example by means of screen-printing or by means of structured rollers, using polymer material.

Alternatively, the relief may also be arbitrary across the surface of the insulation panel.

Preferably, the relief comprises a height difference of between 0.07 and 0.3 mm, preferably between 0.12 and 0.17 mm. It has been found that these height differences are sufficient to obtain the advantages of the invention.

Preferably, the projection of the relief on the surface of the insulation panel forms a pattern of units, for example a pattern of circles.

Preferably, the projection of the relief on the surface of the insulation panel comprises or consists of one or more of a pattern of circles, a diamond pattern, a pattern of hexagons, a line pattern or a grid pattern.

In embodiments in which the projection of the relief on the surface of the insulation panel comprises a pattern of circles, the diameter of the circles is preferably between 0.2 and 0.6 mm, for example 0.33 mm.

In embodiments in which the projection of the relief on the surface of the insulation panel forms a pattern of units, for example a pattern of circles, the number of these units - for example circles - is between 30 and 60 per square centimetre of surface area of the insulation panel, for example 45 per square centimetre of surface area of the insulation panel.

Preferably, the first barrier layer comprises an aluminium foil or the first barrier layer consists of an aluminium foil. More preferably, this aluminium foil has a thickness of more than 5 micrometres, for example 6 or 8 micrometres. If the first barrier layer consists of an aluminium foil, this preferably has a thickness of more than 40 micrometres, and more preferably of less than 75 micrometres, more preferably less than 60 micrometres.

Preferably, the first barrier layer comprises a multi-layered laminate or the first barrier layer consists of a multi-layered laminate. More preferably, the first barrier layer contains a polymer film on its surface, more preferably a polyester film, a polyethylene film or a polyvinylidene film. A polyvinylidene film has the advantage that bonding with a polymer material which forms the relief is easier and better. Preferably, the first barrier layer contains one or more aluminium layers and one or more paper layers (preferably Kraft paper). More preferably, the first barrier layer is a gas-tight barrier layer and the laminate is a gas-tight laminate.

Preferably, the first barrier layer is a gas-tight barrier layer. Gas-tight barrier layers may be used, for example, if the thermal insulation layer comprises or consists of a layer of polyurethane foam or a layer of polyisocyanurate foam.

In preferred embodiments of the invention, the first barrier layer is not gas-tight. More preferably, the first barrier layer is a perforated barrier layer. More preferably, the first barrier layer is configured as has already been described for the embodiments of the first barrier layer, but it is in addition perforated according to a regular perforation pattern or in an irregular manner. First barrier layers which are not gas-tight may be used, for example, if the thermal insulation layer contains or consists of a phenol foam layer, for example a phenol formaldehyde foam layer.

Preferably, at least one pair of opposite lateral edges - and preferably both pairs of opposite lateral edges - of the insulation panel are provided with a tongue and groove in order to couple several such panels to each other in one and the same plane. More preferably, the tongue and the groove are positioned symmetrically with respect to the thickness of the insulation panel.

Preferably, at least one pair of opposite lateral edges - and preferably both pairs of opposite lateral edges - of the insulation panel are provided with L-shaped rebates for coupling several such panels to each other in one and the same plane.

Preferably, one or more laths - more preferably wooden laths - are attached to the first barrier layer. Preferably, with rectangular insulation panels, these laths are fitted in the longitudinal direction of the insulation panel. These laths make it possible to lay a roof covering, for example tiles or slates, more quickly.

Preferably, the insulation panel comprises a second barrier layer on the second side. More preferably, the second barrier layer has the same composition and the same properties as the first barrier layer.

In preferred embodiments the insulation panel comprises, on the surface of the second side, a further layer which forms a second relief - preferably a structured relief pattern - across this surface of the insulation panel. More preferably this second relief is formed by polymer material. Such insulation panels have the advantage that both sides of the panel can be used as the top side; and provide the advantages of the invention. Such embodiments may be important when sawing panels in order to prevent waste by turning over remains of such insulation panels and use them in this way.

Preferably, the further layer comprises one or more of the features of the layer as described in the embodiments mentioned. More preferably, the second barrier layer consists of the same material as the first barrier layer; and the further layer has the same features as the layer.

Preferably, the insulation panel has a length of between 1000 and 2500 mm and/or a width of between 500 and 1300 mm.

The second aspect of the invention is a pitched roof. The pitched roof comprises a roof boarding or roof trusses. On the outside of the roof boarding or the roof trusses, one or more insulation panels such as in any of the embodiments of the first aspect of the invention are attached, with the first barrier layer facing the outside of the roof.

Preferably, one or more insulation panels are attached to the outside of the roof boarding or the roof trusses, with the second barrier layer facing the outside of the roof; and wherein the insulation panel comprises a further layer on the surface of the second side which forms a second relief - preferably a structured relief pattern - across this surface of the insulation panel.

The invention will be explained further in the examples.
Fig. 1 diagrammatically shows a pitched roof comprising insulation panels according to the invention.
Fig. 2 diagrammatically shows an insulation panel according to the invention.
Figs. 3-6 diagrammatically show examples of the surface of insulation panels according to the invention which comprise regularly repeating relief patterns.
Fig. 7 shows a section of the cross section along VII-VII of the insulation panel according to the invention from Fig. 6.
Fig. 8 shows - in an identical illustration as in Fig. 7 - a portion of an insulation panel according to the invention.

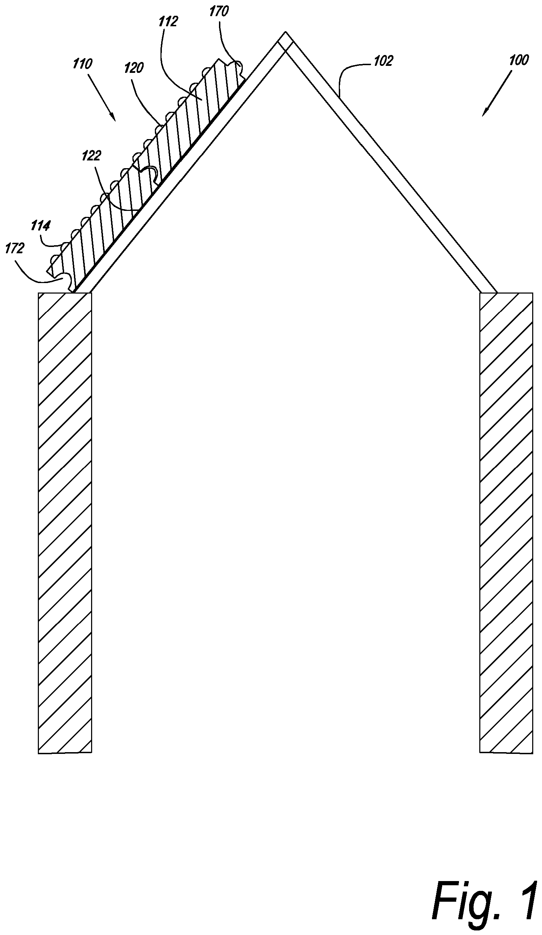

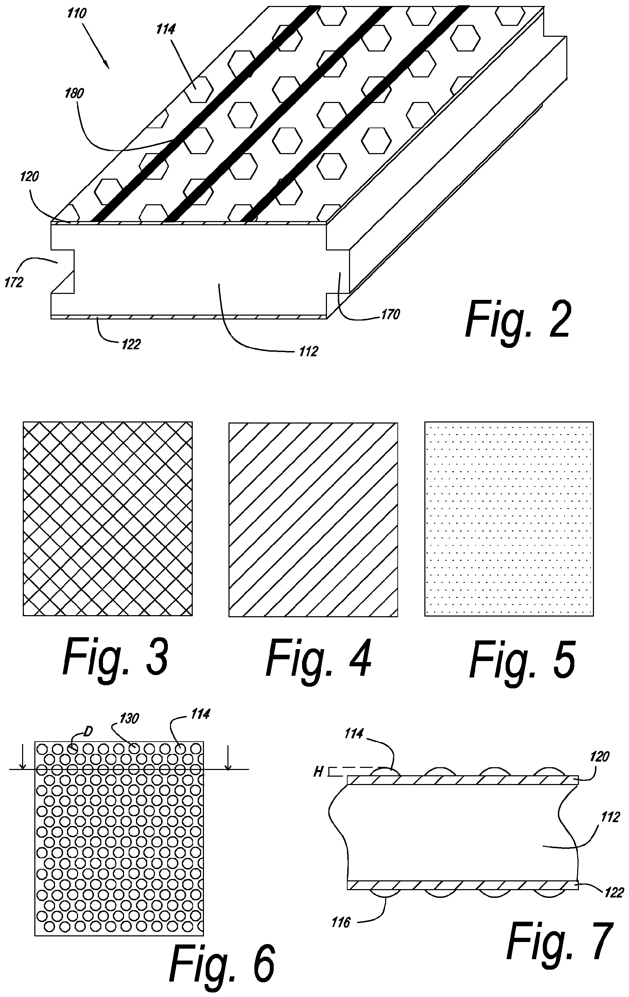

Fig. 1 diagrammatically shows a pitched roof (100) comprising examples of insulation panels (110) according to the invention. Fig. 1 does not show all details of the insulation panel. Fig. 2 diagrammatically shows this insulation panel according to the invention in more detail. The pitched roof (100) contains roof trusses (102). On the outside of the roof trusses, insulation panels (110) according to the first aspect of the invention are attached. These insulation panels (110) comprise a thermal insulation layer (112) and a first barrier layer (120). In the example, the first barrier layer (120) is a gas-tight barrier layer and the thermal insulation layer (112) is a polyisocyanurate foam layer comprising closed cells. This polyisocyanurate foam layer is provided on the first gas-tight barrier layer and bonded thereto. The first gas-tight barrier layer (120) of the insulation panel (110) faces the outside of the roof.

On a pair of opposite lateral edges, the insulation panel is provided with a tongue (170) and groove (172) in order to couple several such panels to each other in one and the same plane. Obviously, it is also possible for the insulation panel to be provided with a tongue and groove on both pairs of opposite lateral edges of the insulation panel.

The insulation panel comprises a thermal insulation layer (112); and, on one side of the thermal insulation layer, a first gas-tight barrier layer (120).

On the surface of the side which comprises the first gas-tight barrier layer, the insulation panel contains a layer (114) which forms a relief - preferably a structured relief pattern - across this surface of the insulation panel. In the example from Fig. 2, this layer - and this relief - are formed by discrete hexagonal units of polyvinyl chloride deposited onto the first gas-tight barrier layer according to a regular pattern. Between these hexagonal units, the first gas-tight barrier layer (120) is still visible and tangible. These hexagonal units result in height differences which form the relief, the height difference is, for example, between 0.12 and 0.17 mm. Preferably, this polyvinyl chloride contains plasticizers.

In order to improve the bond of the polyvinyl chloride to the first gas-tight barrier layer, the first gas-tight barrier layer may, for example, comprise a varnish layer or the top layer of the first gas-tight barrier layer may consist of a polyvinylidene film.

The insulation panel from Figs. 1 and 2 contains a second gas-tight barrier layer (122) on the second side. It is particularly advantageous if the first (120) and the second (122) gas-tight barrier layers have the same composition.

On the insulation panel of the example, a number of wooden laths (180) are attached to the first gas-tight barrier layer.

Figs. 3-6 diagrammatically show examples of the surface of insulation panels according to the invention which contain regularly repeating relief patterns.

Fig. 3 shows an example in which the projection of the relief-forming material on the surface forms a grid pattern.

Fig. 4 shows an example in which the projection of the relief-forming material forms a line pattern on the surface.

Fig. 5 shows an example in which the projection of the relief-forming material on the surface forms a regular pattern of points.

Fig. 6 shows an alternative example. In the example from Fig. 6, the layer (114) which forms the relief consists of convex coating deposits of polymer material, for example polyvinyl chloride. In this case, the projection of the relief-forming material on the surface of the insulation panel forms a regular pattern of circles (130). The diameter (D) of these circles is, for example, 0.33 mm. There are, for example, 45 such circles of polymer material per square centimetre surface of the insulation panel.

Fig. 7 shows a section of the cross section along VII-VII of the insulation panel according to the invention from Fig. 6. The insulation panel contains a thermal insulation layer (112); and, on one side of the thermal insulation layer, a first gas-tight barrier layer (120) and, on the other side of the thermal insulation layer, a second gas-tight barrier layer (122) having the same composition as the first gas-tight barrier layer (120). In the example from Fig. 6, the layer (114) which forms the relief consists of convex coating deposits made from polymer material, with a height H of preferably between 0.12 and 0.17 mm. The polymer mass (preferably polyvinyl chloride) in this layer which forms the relief is, for example, 15 grams per square metre. The outside of the barrier layer (120) may be formed by a film/foil - for example a polyester film or a polyethylene film - on which the convex coating deposits of polymer material - for example polyvinyl chloride, and preferably polyvinyl chloride containing plasticizer - are deposited. Preferably, the polymer of the film differs from the polymer of the polymer material forming the relief.

The first barrier layer (120) may for example - viewed from the thermal insulation layer and in this order - comprise the following layers: a polyester film/foil (e.g. a polyethylene film), an aluminium foil, a polymer film, one or more layers of paper for stability (preferably Kraft paper), and a polyester film. The convex coating deposits (for example made of polyvinyl chloride and preferably of polyvinyl chloride containing plasticizers) are then deposited on the polyester film. The polyester film - containing the convex coating deposits thereon - may be disposed in the barrier layer by lamination (for example by means of a layer of glue).

A further layer (116) is applied to the second gas-tight barrier layer (122) in the same way and with the same dimensions. As a result thereof, both sides of this insulation panel are provided with a relief.

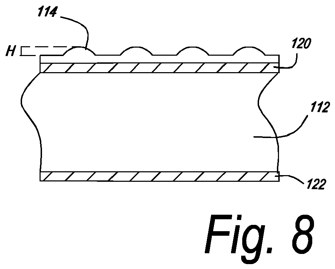

Fig. 8 shows - in an identical illustration as in Fig. 7 - a section of an insulation panel according to the invention. The insulation panel contains a thermal insulation layer (112); and, on one side of the thermal insulation layer, a first gas-tight barrier layer (120) and, on the other side of the thermal insulation layer, a second gas-tight barrier layer (122) having the same composition as the first gas-tight barrier layer (120). The insulation panel illustrated in Fig. 8 contains a layer (114) forming the relief on the first gas-tight barrier layer (120). The layer (114) forming the relief may be produced in the following two ways. This layer may consist of a film/foil - preferably a plastic film - which itself has a relief and which is laminated on the first gas-tight barrier layer (120). This film/foil preferably has the same composition across its entire surface. Alternatively, this layer (114) may be formed by depositing a polymer layer on the entire surface of the first gas-tight barrier layer, but in which the relief is produced by locally applying more polymer material. According to this embodiment, the entire surface of the first gas-tight barrier layer is covered with the polymer material. Alternatively, the layer (114) from Fig. 8 may be formed by a film/foil on which polymer material is deposited locally to form the relief, similar to the method of the example from Fig. 7.

The invention furthermore relates to the following list of numbered items:
Item 1. Insulation panel (110),
   wherein the insulation panel comprises a thermal insulation layer (112) and, on one side of the thermal insulation layer, a first barrier layer (120);
   characterized by the fact that the insulation panel, on the surface of the side which comprises the first barrier layer, has a layer (114) which forms a relief - preferably a structured relief pattern - across this surface of the insulation panel.
Item 2. Insulation panel as in item 1, wherein this relief is formed by polymer material.
Item 3. Insulation panel as in item 2, wherein the polymer material is a thermoplast.
Item 4. Insulation panel as in item 3, wherein the polymer material is polyvinyl chloride, preferably polyvinyl chloride containing plasticizers.
Item 5. Insulation panel as in item 2, wherein the polymer material is a thermoset, for example polyurethane.
Item 6. Insulation panel as in any of the items 2-5, wherein the mass of the polymer material is between 10 and 20 grams per square metre surface area of the insulation panel.
Item 7. Insulation panel (110) as in any of the preceding items, wherein the thermal insulation layer (112) comprises or consists of a foam layer, preferably wherein the foam layer is a foam layer comprising closed cells.
Item 8. Insulation panel (110) as in item 7, wherein the thermal insulation layer (112) comprises or consists of a polyisocyanurate foam layer or a polyurethane foam layer.
Item 9. Insulation panel (110) according to item 7, wherein the thermal insulation layer is a phenolic foam, preferably a phenol formaldehyde foam.
Item 10. Insulation panel (110) according to any of items 7-9, wherein the thermal insulation layer contains a further insulation layer - preferably glass wool or mineral wool; preferably wherein the first barrier layer is applied to the foam layer.
Item 11. Insulation panel as in any of the preceding items 7 - 10, wherein the foam layer is bonded to the first barrier layer.
Item 12. Insulation panel as in any of the preceding items, wherein the first barrier layer comprises a varnish layer.
Item 13. Insulation panel as in any of the preceding items, wherein this relief is formed by polymer material; and wherein the polymer material which forms the relief is situated on the first barrier layer.
Item 14. Insulation panel as in item 13, wherein zones are formed by the polymer material and zones are formed by the first barrier layer - in a preferably regularly alternating way - on the surface of the insulation panel which has the relief.
Item 15. Insulation panel as in item 13, wherein the entire surface of the first barrier layer is covered by the polymer material.
Item 16. Insulation panel as in any of items 1 - 12, wherein this relief is provided in or on a film/foil - preferably on a plastic film/foil - which is laminated on or in the first barrier layer.
Item 17. Insulation panel as in item 16, wherein this relief is formed by polymer material; wherein, on one surface of the insulation panel, zones are formed in a regularly alternating way or an irregular way by the polymer material and zones are formed by the film/foil.
Item 18. Insulation panel as in item 16, wherein this relief is formed by polymer material; and wherein the entire surface of the film/foil is covered by the polymer material.
Item 19. Insulation panel as in item 16, wherein the relief is provided in the film/foil, wherein the film/foil has the same chemical composition across its entire surface.
Item 20. Insulation panel as in any of the preceding items 1 - 19, wherein the relief is a regularly repeating relief pattern across the surface of the insulation panel.
Item 21. Insulation panel as in any of the preceding items 1 - 19, wherein the relief is arbitrary across the surface of the insulation panel.
Item 22. Insulation panel as in any of the preceding items, wherein the relief forms a height difference (H) of between 0.07 and 0.3 mm, preferably between 0.12 and 0.17 mm.
Item 23. Insulation panel as in any of the preceding items, wherein the projection of the relief on the surface of the insulation panel comprises or consists of one or more of a pattern of units, for example of circles (130), a diamond pattern, a pattern of hexagons, a line pattern or a grid pattern.
Item 24. Insulation panel such as in item 23, wherein the projection of the relief on the surface of the insulation panel comprises a pattern of circles (130), wherein the diameter (D) of the circles is between 0.2 and 0.6 mm.
Item 25. Insulation panel such as in items 23 of 24, wherein the projection of the relief on the surface of the insulation panel comprises a pattern of units, for example a pattern of circles, wherein the number of units - for example circles - is between 30 and 60 per square centimetre of surface area of the insulation panel.
Item 26. Insulation panel as in any of the preceding items, wherein the first barrier layer comprises or consists of an aluminium foil, wherein the aluminium foil preferably has a thickness of more than 5 micrometres.
Item 27. Insulation panel as in any of the preceding items, wherein the first barrier layer comprises or consists of a multi-layered laminate, preferably the first barrier layer is a gas-tight barrier layer and the laminate is a gas-tight laminate.
Item 28. Insulation material as in item 27, wherein the first barrier layer comprises a polymer film at its surface - preferably a polyethylene film or a polyvinylidene film or a polyester film -, and preferably wherein the first barrier layer comprises one or more aluminium layers and one or more paper layers.
Item 29. Insulation panel as in any of the preceding items 1 - 28, wherein the first barrier layer is a gas-tight barrier layer.
Item 30. Insulation panel as in any of the preceding items 1 - 28, wherein the first barrier layer is not gas-tight, preferably because the first barrier layer is a perforated barrier layer, more preferably the first barrier layer is a barrier layer according to any of the preceding items 26 - 28 provided with perforations.
Item 31. Insulation panel as in any of the preceding items, wherein at least one pair of opposite lateral edges - and preferably both pairs of opposite lateral edges - of the insulation panel are provided with a tongue (170) and a groove (172) in order to couple several such panels to each other in one and the same plane; preferably, the tongue and the groove are positioned symmetrically with respect to the thickness of the insulation panel.
Item 32. Insulation panel as in any of the preceding items, wherein at least one pair of opposite lateral edges - and preferably both pairs of opposite lateral edges - of the insulation panel are provided with L-shaped rebates for coupling several such panels to each other in one and the same plane.
Item 33. Insulation panel as in any of the preceding items, wherein one or more laths (180) - preferably wooden laths - are attached to the first barrier layer.
Item 34. Insulation panel as in any of the preceding items, wherein the insulation panel comprises a second barrier layer (122) on the second side; preferably wherein the second barrier layer has the same composition and properties as the first barrier layer.
Item 35. Insulation panel as in item 34; wherein the insulation panel, on the surface of the second side, comprises a further layer (116) which forms a second relief - preferably a structured relief pattern -across this surface of the insulation panel, preferably wherein this second relief is formed by polymer material.
Item 36. Insulation panel as in item 35, wherein the further layer comprises one or more of the features of the layer as described in items 1 to 33.
Item 37. Insulation panel such as in item 36, wherein the second barrier layer consists of the same material as the first barrier layer; and wherein the further layer has the same features as the layer.
Item 38. Insulation panel as in any of the preceding items, wherein the insulation panel has a length of between 1000 and 2500 mm and/or a width of between 500 and 1300 mm.
Item 39. Pitched roof (100), wherein the pitched roof comprises a roof boarding or roof trusses (102) and wherein, on the outside of the roof boarding or the roof trusses, one or more insulation panels (110) as in any of the items 1 - 38 are attached to the first barrier layer (120) facing the outside of the roof.
Item 40. Pitched roof such as in item 39, wherein, on the outside of the roof boarding or the roof trusses, one or more insulation panels as in any of the items 35-38 are attached with the second barrier layer facing the outside of the roof.

## Claims

1. Insulation panel (110),
wherein the insulation panel comprises a thermal insulation layer (112) and, on one side of the thermal insulation layer, a first barrier layer (120);
wherein the insulation panel, on the surface of the side which comprises the first barrier layer, has a layer (114) which forms a relief - preferably a structured relief pattern - across this surface of the insulation panel;
wherein this relief is provided in or on a film/foil - preferably on a plastic film/foil - which is laminated on or in the first barrier layer.

2. Insulation panel as in claim 1, wherein the relief is provided in the film/foil, wherein the film/foil has the same chemical composition across its entire surface.

3. Insulation panel as in claim 1, wherein this relief is formed by polymer material; and wherein the entire surface of the film/foil is covered by the polymer material.

4. Insulation panel (110) as in any of the preceding claims, wherein the thermal insulation layer (112) comprises or consists of a foam layer, preferably wherein the foam layer is a foam layer comprising closed cells.

5. Insulation panel (110) as in claim 4, wherein the thermal insulation layer (112) comprises or consists of a polyisocyanurate foam layer or a polyurethane foam layer, or wherein the thermal insulation layer is a phenolic foam, preferably a phenol formaldehyde foam.

6. Insulation panel (110) according to claims 4 or 5, wherein the thermal insulation layer contains a further insulation layer - preferably glass wool or mineral wool; preferably wherein the first barrier layer is applied to the foam layer.

7. Insulation panel according to claims 4 or 5, wherein the foam layer is bonded to the first barrier layer.

8. Insulation panel as in any of the preceding claims, wherein the relief is a regularly repeating relief pattern across the surface of the insulation panel; or wherein the relief is arbitrary across the surface of the insulation panel.

9. Insulation panel as in any of the preceding claims, wherein the relief forms a height difference (H) of between 0.07 and 0.3 mm, preferably between 0.12 and 0.17 mm.

10. Insulation panel as in any of the preceding claims, wherein the first barrier layer comprises or consists of an aluminium foil, wherein the aluminium foil preferably has a thickness of more than 5 micrometres.

11. Insulation panel as in any of the preceding claims, wherein the first barrier layer comprises or consists of a multi-layered laminate, preferably the first barrier layer is a gas-tight barrier layer and the laminate is a gas-tight laminate.

12. Insulation panel as in any of the preceding claims 1 - 11, wherein the first barrier layer is a gas-tight barrier layer.

13. Insulation panel as in any of the preceding claims, wherein the insulation panel comprises a second barrier layer (122) on the second side; preferably wherein the second barrier layer has the same composition and properties as the first barrier layer.

14. Insulation panel as in claim 13; wherein the insulation panel, on the surface of the second side, comprises a further layer (116) which forms a second relief - preferably a structured relief pattern -across this surface of the insulation panel, preferably wherein this second relief is formed by polymer material.

15. Pitched roof (100), wherein the pitched roof comprises a roof boarding or roof trusses (102) and wherein, on the outside of the roof boarding or the roof trusses, one or more insulation panels (110) as in any of the claims 1-14 are attached to the first barrier layer (120) facing the outside of the roof.
